# EUROPEAN PATENT APPLICATION

(11) **EP 4 542 919 A1**
(43) Date of publication of application: **23.04.2025**
(21) Application number: 24207497.9
(22) Date of filing: 18.10.2024
(51) Int. Cl.: H04L 9/06, H04L 9/08

(54) **REUSING RESUMPTION SECRETS OBTAINED FROM POST-QUANTUM CIPHERS**

(30) Priority: 18.10.2023 US 202318489585
(71) Applicant: GOOGLE LLC, Mountain View CA 94043 (US)
(72) Inventor: WANG, Dexiang, Mountain View, 94043 (US); STEVENSON, Matthew John, Mountain View, 94043 (US); MISOCZKI, Rafael, Mountain View, 94043 (US); SCHIFFMAN, Michael David, Mountain View, 94043 (US); RUBAKHA, Dmitri, Mountain View, 94043 (US); BORN, Daniel James, Mountain View, 94043 (US); SCHMIEG, Sophie, Mountain View, 94043 (US)
(74) Representative: Shipp, Nicholas

(57) **Abstract**

An example method is provided for resuming a communication session encrypted using a post-quantum cipher. The example method can include receiving, by a first computing system, a resumption message from a second computing system. The example method can include decrypting, by the first computing system, the resumption message to obtain a resumption secret, wherein the resumption secret is based on at least a portion of a shared secret that was obtained using a post-quantum cipher during a prior handshake sequence between the first computing system and the second computing system. The example method can include encrypting, by the first computing system, one or more messages using a session key based on the resumption secret. The example method can include sending, by the first computing system, the encrypted one or more messages to the second computing system.

## Description

### PRIORITY

The present application is based on and claims priority to United States Patent Application No. 18/489,585, which was filed October 18, 2023, and which is hereby incorporated by reference herein in its entirety.

### FIELD

The present disclosure relates generally to secured communications protocols. More particularly, aspects of the present disclosure relate to resuming sessions secured with post-quantum ciphers.

### BACKGROUND

Computing devices can secure communications using cryptographic protocols. A sender device and a receiver device can initiate an encrypted communication stream by conducting a "handshake" sequence in which the devices agree on an encryption scheme and exchange sufficient information so that each device can decrypt messages encrypted by the other.

When the sender and receiver resume communication after an intervening period of time, the sender and receiver can naively perform the full handshake, or, to reduce latency and computing cost, the sender and receiver can engage in a more compact resumption protocol that leverages existing knowledge about the prior session.

Some traditional communication protocols are secured using encryption keys obtained using computations that are difficult to breach using classical computers while being susceptible to easier attack using quantum computations. For instance, factorization-based encryption keys may be robust to attacks in a classical computing environment, but quantum computers implementing Shor's algorithm may enable easier penetration. Post-quantum cryptography aims to provide security solutions that are robust to attacks leveraging quantum computing devices.

### SUMMARY

Aspects and advantages of embodiments of the present disclosure will be set forth in part in the following description, or can be learned from the description, or can be learned through practice of the embodiments.

Example implementations of the present disclosure are directed to an example method. The example method can include receiving, by a first computing system, a resumption message from a second computing system. The example method can include decrypting, by the first computing system, the resumption message to obtain a resumption secret. In some implementations of the example method, the resumption secret is based on at least a portion of a shared secret that was obtained using a post-quantum cipher during a prior handshake sequence between the first computing system and the second computing system. The example method can include encrypting, by the first computing system, one or more messages using a session key based on the resumption secret. The example method can include sending, by the first computing system, the encrypted one or more messages to the second computing system.

In some implementations of the example method, encrypting, by the first computing system, the one or more messages based on the resumption secret includes obtaining, by the first computing system, a primary secret from the resumption secret. In some implementations of the example method, encrypting, by the first computing system, the one or more messages based on the resumption secret includes encrypting, by the first computing system, the one or more messages using a session key obtained using the primary secret.

In some implementations of the example method, obtaining, by the first computing system, the primary secret includes hashing, by the first computing system, the resumption secret. In some implementations of the example method, obtaining, by the first computing system, the primary secret includes extracting, by the first computing system, a portion of the hashed output as the primary secret.

In some implementations of the example method, the shared secret was obtained by hashing a first value together with a second value, wherein the first value was obtained using the post-quantum cipher. In some implementations of the example method, the second value was not obtained using the post-quantum cipher. In some implementations of the example method, the second value comprises a Diffie-Hellman parameter.

In some implementations of the example method, the prior handshake sequence includes hashing the first value together with the second value to obtain the shared secret. In some implementations of the example method, the prior handshake sequence includes designating a first portion of the shared secret as an initial primary secret. In some implementations of the example method, the prior handshake sequence includes designating a second portion of the shared secret as the resumption secret. In some implementations of the example method, the prior handshake sequence includes obtaining a session key for encrypting one or more messages using the initial primary secret.

In some implementations of the example method, the shared secret includes the primary secret concatenated with the resumption secret and an authentication secret. In some implementations of the example method, the authentication secret is used at the end of a handshake to verify one or more messages sent between the first computing system and the second computing system.

In some implementations of the example method, the prior handshake sequence includes receiving, by the first computing system and from the second computing system, a public key obtained using a post-quantum cipher. In some implementations of the example method, the prior handshake sequence includes generating, by the first computing system and based on the public key, the shared secret and a keyshare. In some implementations of the example method, the prior handshake sequence includes sending, by the first computing system, the keyshare to the second computing system. In some implementations of the example method, the prior handshake sequence includes receiving, by the first computing system and from the second computing system, one or more messages encrypted by the second computing system using the shared secret. In some implementations of the example method, the second computing system obtained the shared secret using the keyshare and a private key corresponding to the public key.

In some implementations of the example method, the first computing system does not receive the public key from the second computing system again when resuming the communication session.

Example aspects of the present disclosure are directed to one or more non-transitory computer-readable media that store instructions that are executable by one or more processors to cause a computing system to perform operations, the operations including the example method.

Example aspects of the present disclosure are directed to a computing system including one or more processors and one or more non-transitory computer-readable media that store instructions that are executable by the one or more processors to cause the computing system to perform operations, the operations including the example method.

Example aspects of the present disclosure are directed to an example networked computing system. The example networked computing system can include a first computing system, a second computing system, and a network connecting the first computing system and the second computing system. In the example networked computing system, the first computing system can be configured to send a resumption message to the second computing system and obtain a resumption secret. The resumption secret can enable generation of a session key for a resumed session. The resumption secret can be based on at least a portion of a shared secret that was obtained using a post-quantum cipher during a prior handshake sequence between the first computing system and the second computing system. In the example networked computing system, the second computing system can be configured to decrypt the resumption message to obtain the resumption secret, generate the session key based on the resumption secret, and transmit a message encrypted by the session key to the first computing system.

In some implementations of the example networked computing system, the resumption secret encodes entropy of one or more post-quantum cipher operations.

In some implementations of the example networked computing system, the post-quantum cipher cannot be breached in polynomial time by a quantum computer.

In some implementations of the example networked computing system, the shared secret was obtained by hashing a first value together with a second value, the first value was obtained using the post-quantum cipher, and the second value was not obtained using the post-quantum cipher.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to describe the related principles.

### BRIEF DESCRIPTION OF THE DRAWINGS

Detailed discussion of embodiments directed to one of ordinary skill in the art is set forth in the specification, which makes reference to the appended figures, in which:
Figure 1 is a block diagram of an example system for conducting post-quantum secured resumption handshakes according to example aspects of some embodiments of the present disclosure;
Figure 2 is a block diagram of an example system for conducting post-quantum secured resumption handshakes according to example aspects of some embodiments of the present disclosure;
Figure 3 is a block diagram of an example system for conducting post-quantum secured resumption handshakes according to example aspects of some embodiments of the present disclosure;
Figure 4 is a block diagram of an example processing flow for conducting post-quantum secured resumption handshakes according to example aspects of some embodiments of the present disclosure;
Figure 5 is a block diagram of an example processing flow for conducting post-quantum secured resumption handshakes according to example aspects of some embodiments of the present disclosure;
Figure 6 is a flow chart diagram of an example method for implementing techniques according to example aspects of some embodiments of the present disclosure;
Figure 7 depicts a flow chart diagram of an example method 700 for generating feedback signals for training a machine-learned agent model according to example embodiments of the present disclosure;
Figure 8 is a block diagram of an example computing system for implementing techniques according to example aspects of some embodiments of the present disclosure;

Reference numerals that are repeated across plural figures are intended to identify the same features in various implementations.

### DETAILED DESCRIPTION

Example techniques of the present disclosure generally relate to efficient communication protocols secured using post-quantum cryptography. Communication protocols using keys generated using post-quantum ciphers (PQCs)-or computations that are challenging for quantum computers to evaluate-can provide increased security. PQC-based encryption protocols can be expensive to implement. To decrease a latency associated with initiating and resuming encrypted communication sessions using the PQC-based encryption, example implementations can generate initial PQC-based security secrets during an initial handshake between communicating devices and store a PQC-based resumption secret obtained from the initial PQC-based security secret. The PQC-based resumption secret can carry the entropy of the initial PQC-based security secret. The PQC-based resumption secret can be used to resume the encrypted session, in effect re-using the information and entropy of the initial PQC computations to secure the resumed sessions. In this manner, for instance, example implementations of the present disclosure can improve the efficiency of PQC-based encryption protocols.

Example techniques of the present disclosure can also streamline the data communicated within the resumption handshake. For instance, in various client-server production environments, many encrypted communication sessions can be resumed using a server-issued ticket. The ticket can include an encrypted representation of a shared secret previously established between the client and the server. In many scenarios, presenting the ticket to the server is sufficient to resume the encrypted session, since the contents of the ticket indicate that the full security handshake was successfully performed.

Example implementations of the present disclosure can omit sending various other credentials along with the ticket. This omission can be based on an evaluation of the success rate for ticket-based resumption. For instance, when the additional credentials are omitted, there may be situations where the ticket-based resumption fails, requiring a full initial handshake to be performed. The client would generally send the additional credentials at that time. Thus the evaluation can consider the probability of a successful ticket-based resumption (e.g., in which full credentials may not be needed) as compared to the probability that the full credentials would be used for a full handshake.

Based on the probability of a successful ticket-based resumption, for instance, a client certificate can be omitted. In many real-world scenarios, certificates can be large and are generally increasing in size (e.g., with increasing levels of security needed in a post-quantum environment). This can lead to significant communication bandwidth demands at scale. For instance, for a large-scale production environment that sees 2 G/s handshakes, decreasing a message size by only 5 KB can relieve 10 TB/s of data transfer from the network.

Example techniques of the present disclosure can also manage failure scenarios when ticket-based resumption fails. For instance, ticket-based resumption can fail for a variety of reasons. For instance, one reason can be that a resumption key for decrypting the ticket can rotate and no longer be operable to decrypt the ticket. Another reason can be an enforced time limit within which sessions can be resumed. One failure management technique described herein includes triggering a new message from the system receiving the ticket (e.g., the server) to indicate that information is missing. When the system sending the ticket (e.g., the client) receives the message, the system can initiate a full handshake procedure.

Example techniques of the present disclosure can also operate to avoid failures by truncating a list of available session identifiers for which resumption is available. For instance, a server can advertise what session identifiers are available for resumption, and a client can use one of the identifiers to obtain (e.g., from the client's cache) a corresponding ticket to present to the server. By truncating the list of session identifiers that are associated with an expired resumption key or expired resumption window, example implementations of the present disclosure can operate to avoid failed resumption handshakes (and the corresponding messages sent in support thereof).

Example techniques of the present disclosure can provide a number of technical effects and benefits. A technical effect of example implementations of the present disclosure is increased communications security. By increasing the efficiency of higher-security encryption protocols based on post-quantum ciphers, example implementations of the present disclosure can facilitate increased adoption of the higher-security protocols. Increased adoption of higher-security protocols can lead to increased communications security standards, which in turn can improve the state of the field as a whole. In this manner, for instance, example implementations can improve the functioning of connected computers and advance the field of secured communications (e.g., network communications) as a whole.

A technical effect of example implementations of the present disclosure is more efficient resumption of secure communication sessions. Example implementations can provide improved energy efficiency. For instance, by reducing a number of PQC computations, or by reducing an amount of data transmitted for a PQC-based handshake, example implementations of the present disclosure can decrease an amount of energy used to perform computations or transmit/receive data. In this manner, for instance, the improved energy efficiency of example implementations of the present disclosure can effectively reduce an amount of pollution or other waste associated with implementing secured communication protocols, thereby advancing the fields of information security and networked systems as a whole. The amount of pollution can be reduced in toto (e.g., an absolute magnitude thereof) or on a normalized basis (e.g., energy per task, etc.). For example, an amount of CO2 released (e.g., by a power source) in association with encrypted communication sessions can be reduced by implementing more energy-efficient resumption protocols. An amount of heat pollution in an environment (e.g., emitted by a client device, a server device, etc.) can be reduced by implementing more energy-efficient resumption protocols. In this manner, for instance, example implementations can improve the functioning of connected computers and advance the field of secured communications (e.g., network communications) as a whole.

A technical effect of example implementations of the present disclosure is lower latency PQC-based encrypted communications. For instance, by reducing a number of PQC computations, or by reducing an amount of data transmitted for a PQC-based handshake, example implementations of the present disclosure can decrease an amount of time used to compute PQC-based secrets or session keys or decrease an amount of time to transmit data (e.g., by decreasing an amount of data transmitted). In this manner, for instance, example implementations can improve the functioning of connected computers and advance the field of secured communications (e.g., network communications) as a whole.

Reference now is made to the figures, which provide example arrangements of computing systems, model structures, and data flows for illustration purposes only.

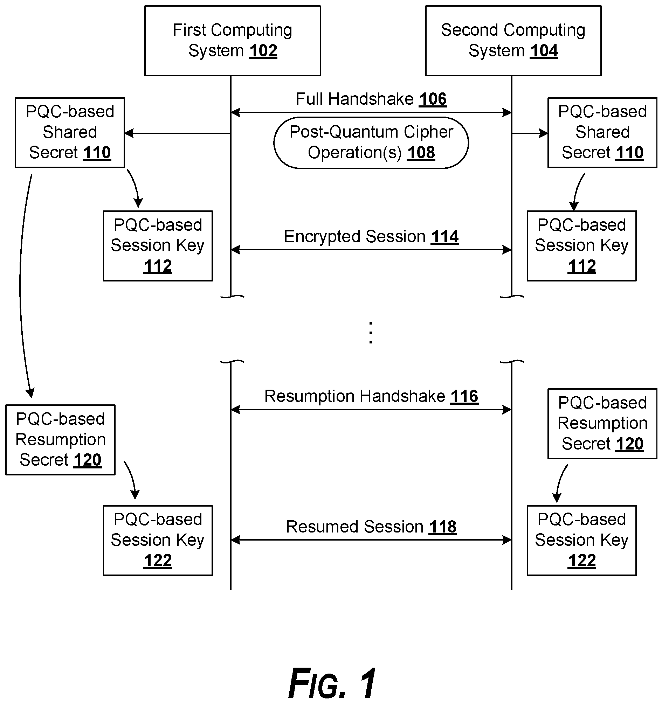

Figure 1 illustrates an example system configured to reuse PQC-based secrets according to aspects of the present disclosure. A first computing system 102 and a second computing system 104 can communicate. First computing system 102 and second computing system 104 can communicate over a network connection or any other type of communication channel.

Any one of first computing system 102 and second computing system 104 can initiate a full handshake 106. During full handshake 106, either one or both of first computing system 102 and second computing system 104 can perform one or more post-quantum cipher (PQC) operation(s) 108. Based on data received by the respective devices during full handshake 106, first computing system 102 and second computing system 104 can each obtain a PQC-based shared secret 110. At least a portion of PQC-based shared secret 110 can capture or encode an output of PQC operation(s) 108. First computing system 102 and second computing system 104 can derive, from PQC-based secret 110, a PQC-based session key 112 for establishing an encrypted session 114.

To resume the encrypted session after a period of time, first computing system 102 and second computing system 104 can engage in a resumption handshake 116. Resumption handshake 116 can be performed without repeating one or more (or all) of PQC operation(s) 108. Nevertheless, resumed session 118 can be encrypted based on the PQC operation(s) 108. First computing system 102 and second computing system 104 can obtain a resumption secret 120 derived from the initial PQC operations 108 of the full handshake (e.g., derived from the PQC-based shared secret 110). From the PQC-based resumption secret, first computing system 102 and second computing system 104 can obtain a PQC-based resumed session key 122 (which can be the same as or different from PQC-based session key 112) to encrypt/decrypt messages for resumed session 118.

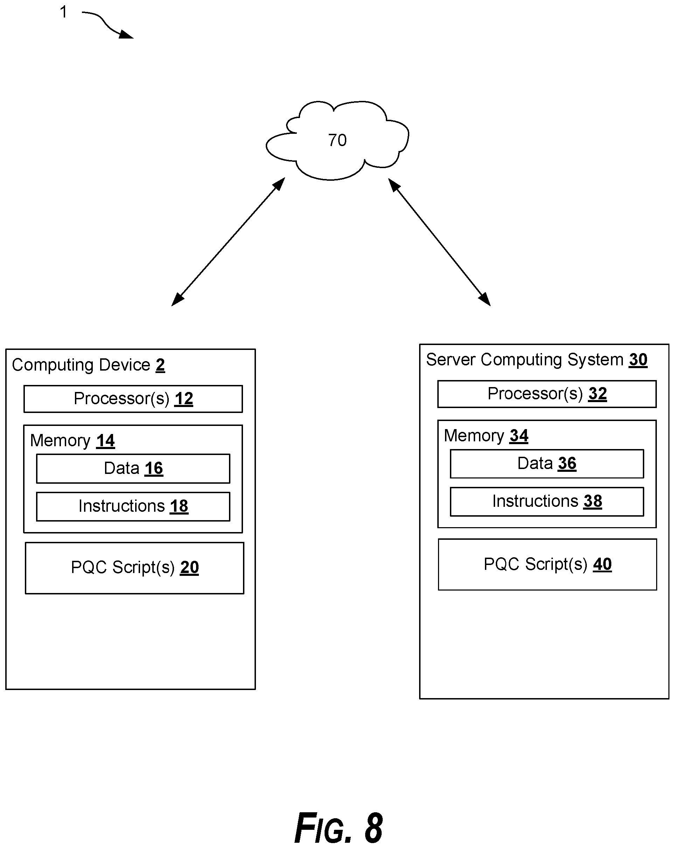

First computing system 102 can include one or more computing devices or components. First computing system 102 can include one or more co-located devices or multiple distributed computing devices. Example computing systems are described herein with respect to Figure 8. First computing system 102 can be a virtual machine, a containerized instance of a computing process, a bare metal computing system, etc. Actions ascribed to first computing system 102 can be performed by the same device within first computing system 102 or by different devices within, controlled by, or otherwise associated with first computing system 102.

Second computing system 104 can include one or more computing devices or components. Second computing system 104 can include one or more co-located devices or multiple distributed computing devices. Example computing systems are described herein with respect to Figure 8. Second computing system 104 can be a virtual machine, a containerized instance of a computing process, a bare metal computing system, etc. Actions ascribed to second computing system 104 can be performed by the same device within second computing system 104 or by different devices within, controlled by, or otherwise associated with second computing system 104.

Full handshake 106 can include a sequence of communications between first computing system 102 and second computing system 104 that establish a shared encryption protocol for encrypting and decrypting messages passed between first computing system 102 and second computing system 104. For instance, full handshake 106 can include an exchange of information that allows each of first computing system 102 and second computing system 104 to generate a shared secret used to initiate and maintain encrypted communications.

To establish a secured communication channel robust to attack using quantum computers, full handshake 106 can include performance of one or more post quantum operation(s) 108. First computing system 102 can perform one or more PQC operation(s) 108. Second computing system 104 can perform one or more PQC operation(s) 108. One or more PQC operation(s) 108 performed by first computing system 102 can be the same as or different from one or more PQC operation(s) 108 performed by second computing system 104.

PQC operation(s) 108 can include one or more processing sequences configured to use operations that are challenging for quantum computers to perform. Example PQC operation(s) 108 cannot be resolved in polynomial time by a quantum computer using one or more quantum processors having one or more qubits (e.g., using Shor's algorithm). An example PQC operation 108 can exhibit less than exponential speed-up when processing moves from classical to quantum processors. An example PQC operation 108 can exhibit quadratic or linear speed-up when processing moves from classical to quantum processors (e.g., using Grover's algorithm).

Example PQC operation(s) 108 can include lattice-based cryptography. Example PQC operation(s) 108 can include code-based cryptography. Example PQC operation(s) 108 can include multivariate polynomial cryptography. Example PQC operation(s) 108 can include hash-based signatures.

PQC-based shared secret 110 can be or include any value that encodes at least a portion of the entropy of the cryptographic operations performed in PQC operation(s) 108. A PQC-based shared secret 110 can be or be based on an output of one or more of the PQC operation(s) 108 performed during full handshake 106. PQC-based shared secret 110 can be a value generated based on an output of one or more of the PQC operation(s) 108 performed during full handshake 106. PQC-based shared secret 110 can provide a mutual primitive for generating cryptographic keys for encrypting and decrypting messages.

PQC-based session key 112 can be a derivative of PQC-based shared secret 110. For instance, PQC-based session key 112 can be generated from PQC-based shared secret 110. PQC-based session key 112 can be generated by processing PQC-based shared secret 110 with a key generation component.

Encrypted session 114 can include an exchange of message(s) between first computing system 102 and second computing system 104 that have been encrypted using PQC-based session key 112.

Resumption handshake 116 can, after some period of time, facilitate resuming an encrypted communication session between first computing system 102 and second computing system 104, resumed session 118.

Resumed session 118 can be secured using PQC-based resumption secret 120. For instance, resumed session 118 can be encrypted using PQC-based session get 122 obtained from PQC-based resumption secret 120.

PQC-based resumption secret 120 can be the same as or different from PQC-based shared secret 110. PQC-based resumption secret 120 can be a part of or a derivative from PQC-based shared secret 110. PQC-based resumption secret 120 can carry the entropy of PQC-based shared secret 110. PQC-based resumption secret 120 can be used to initiate resumed session 118 (by obtaining PQC-based session key 122 therefrom), in effect re-using the information and entropy of PQC operation(s) 108 to secure resumed session 118.

PQC-based resumption secret 120 can persist on one or both of first computing system 102 or second computing system 104. If PQC-based resumption secret 120 persists on one system (e.g., and not the other), the one system can transmit PQC-based resumption secret 120 to the other system after authenticating the identity of the other system. The PQC-based resumption secret 120 can be transmitted in an encrypted format (e.g., encrypted according to a previously-agreed upon protocol that the recipient can use). For example, in Figure 1, PQC-based resumption secret 120 can be obtained from PQC-based shared secret 110 by first computing system 102. Second computing system 104 can either obtain PQC-based resumption secret 120 from PQC-based shared secret 110 directly or receive or otherwise retrieve PQC-based resumption secret 120 based on a message from first computing system 102 (e.g., a resumption ticket or message).

PQC-based session key 122 can be the same as or different from PQC-based session key 112. PQC-based session key 122 can be a derivative of PQC-based resumption secret 120. For instance, PQC-based session key 122 can be generated from PQC-based resumption secret 120. PQC-based session key 122 can be generated by processing PQC-based resumption secret 120 with a key generation component.

Advantageously, one or more of first computing system 102 or second computing system 104 can retrieve, recover, or otherwise obtain PQC-based resumption secret 120 without re-executing PQC operation(s) 108.

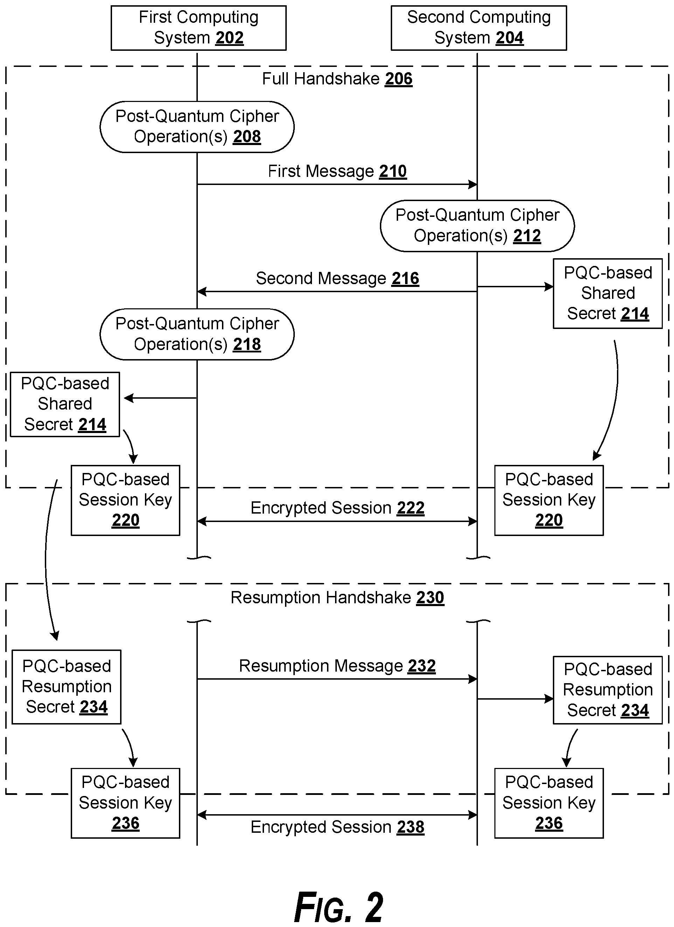

Figure 2 describes example implementations in further detail. First computing system 202 can communicate with second computing system 204 to engage in a full handshake 206. In full handshake 206, first computing system 202 can perform one or more PQC operation(s) 208. First computing system 202 can send an output of PQC operation(s) 208 to second computing system 204 in first message 210. Second computing system 204 can perform one or more PQC operation(s) 212 to generate PQC-based shared secret 214. Second computing system 204 can return second message 216 to first computing system 202. Second message 216 can contain one or more outputs of PQC operation(s) 212. First computing system 202 can perform PQC operation(s) 218 using contents of second message 216 to obtain PQC-based shared secret 214. Both first computing system 202 and second computing system 204 can obtain the same PQC-based shared secret 214 and thus derive the same PQC-based session key 220 for establishing and maintaining an encrypted session 222 for encoded and decoding encrypted messages sent between first computing system 202 and second computing system 204.

After some period of time, encrypted session 222 may pause, terminate, expire, etc. To resume the encrypted session after a period of time, first computing system 202 and second computing system 204 can engage in a resumption handshake 230. Resumption handshake 230 can be performed without repeating one or more (or all) of PQC operation(s) 208, 212, 218, etc. Resumption handshake 230 can facilitate re-using previously derived credentials for encrypting the session. For instance, first computing system 202 can send resumption message 232 to second computing system 204. Resumption message 232 can contain data that allows second computing system 204 to obtain a resumption secret 234 that is derived from the original PQC-based shared secret 214. Once first computing system 202 and second computing system 204 both possess PQC-based session key 236 derived from resumption secret 234, the systems can establish and maintain a resumed encrypted session 238. In this manner, for instance, resumed session 238 can be encrypted based on PQC operation(s) 208, 212, 218, etc. without repeating one or more (or all) of PQC operation(s) 208, 212, 218, etc.

First computing system 202 can be the same as or different from first computing system 102. First computing system 202 can include one or more computing devices or components. First computing system 202 can include one or more co-located devices or multiple distributed computing devices. Example computing systems are described herein with respect to Figure 8. First computing system 202 can be a virtual machine, a containerized instance of a computing process, a bare metal computing system, etc. Actions ascribed to first computing system 202 can be performed by the same device within first computing system 202 or by different devices within, controlled by, or otherwise associated with first computing system 202.

Second computing system 204 can be the same as or different from second computing system 104. Second computing system 204 can include one or more computing devices or components. Second computing system 204 can include one or more co-located devices or multiple distributed computing devices. Example computing systems are described herein with respect to Figure 8. Second computing system 204 can be a virtual machine, a containerized instance of a computing process, a bare metal computing system, etc. Actions ascribed to second computing system 204 can be performed by the same device within second computing system 204 or by different devices within, controlled by, or otherwise associated with second computing system 204.

Example actions described herein as being performed by first computing system 202 can be instead performed by second computing system 204, and actions described herein as being performed by second computing system 204 can instead be performed by first computing system 202.

Full handshake 206 can be the same as or different from full handshake 106. Full handshake 206 can include a sequence of communications between first computing system 202 and second computing system 204 that establish a shared encryption protocol for encrypting and decrypting messages passed between first computing system 202 and second computing system 204. For instance, full handshake 206 can include an exchange of information that allows each of first computing system 202 and second computing system 204 to generate a shared secret used to initiate and maintain encrypted communications.

To establish a secure communication channel robust to attack using quantum computers, full handshake 206 can include performance of one or more post quantum operation(s) 208, 212, 218, etc. First computing system 202 can perform one or more PQC operation(s) 208, 212, 218, etc. Second computing system 204 can perform one or more PQC operation(s) 208, 212, 218, etc. One or more PQC operation(s) 208, 212, 218, etc. performed by first computing system 202 can be the same as or different from one or more PQC operation(s) 208, 212, 218, etc. performed by second computing system 204.

For example, first computing system 202 can perform PQC operation(s) 208 to generate a first cryptographic output (e.g., a cryptographic primitive) to send in first message 210. PQC operation(s) 208 can include, for instance, generating a public key value using one or more post-quantum cryptography operations 208. PQC operation(s) 208 can include, for instance, generating a private key value using one or more post-quantum cryptography operations 208 that corresponds to the public key.

PQC operation(s) 208 can include one or more processing sequences configured to use operations that are challenging for quantum computers to perform. Example PQC operation(s) 208 cannot be resolved in polynomial time by a quantum computer using one or more quantum processors having one or more qubits (e.g., using Shor's algorithm). An example PQC operation 208 can exhibit less than exponential speed-up when processing moves from classical to quantum processors. An example PQC operation 208 can exhibit quadratic or linear speed-up when processing moves from classical to quantum processors (e.g., using Grover's algorithm).

Example PQC operation(s) 208 can include lattice-based cryptography. Example PQC operation(s) 208 can include code-based cryptography. Example PQC operation(s) 208 can include multivariate polynomial cryptography. Example PQC operation(s) 208 can include hash-based signatures.

First message 210 can include a cryptographic output (e.g., a cryptographic primitive) configured to allow second computing system 204 to obtain PQC-based shared secret 214. Second computing system 204 can derive PQC-based shared secret 214 from first message 210 using PQC operation(s) 212.

PQC operation(s) 212 can include one or more processing sequences configured to use operations that are challenging for quantum computers to perform. Example PQC operation(s) 212 cannot be resolved in polynomial time by a quantum computer using one or more quantum processors having one or more qubits (e.g., using Shor's algorithm). An example PQC operation 212 can exhibit less than exponential speed-up when processing moves from classical to quantum processors. An example PQC operation 212 can exhibit quadratic or linear speed-up when processing moves from classical to quantum processors (e.g., using Grover's algorithm).

Example PQC operation(s) 212 can include lattice-based cryptography. Example PQC operation(s) 212 can include code-based cryptography. Example PQC operation(s) 212 can include multivariate polynomial cryptography. Example PQC operation(s) 212 can include hash-based signatures.

PQC operation(s) 212 can generate, from a cryptographic output received from first message 210, a new cryptographic output. The cryptographic output received from first message 210 can include a first cryptographic primitive. PQC operation(s) 212 can generate PQC-based shared secret 214. PQC operation(s) 212 can also generate a second cryptographic primitive to send in second message 216 that can allow first computing system 202 to derive PQC-based shared secret 214.

PQC-based shared secret 214 can be or include any value that encodes at least a portion of the entropy of the cryptographic operations performed in PQC operation(s) 208, 212, 218, etc. A PQC-based shared secret 214 can be or be based on an output of one or more of the PQC operation(s) 208, 212, 218, etc. performed during full handshake 206. PQC-based shared secret 214 can be a value generated based on an output of one or more of the PQC operation(s) 208, 212, 218, etc. performed during full handshake 206. PQC-based shared secret 214 can provide a mutual primitive from which first computing system 202 and second computing system 204 can generate cryptographic keys for encrypting and decrypting messages.

Second message 216 can include a cryptographic primitive configured such that first computing system 202 can generate PQC-based shared secret 214. For instance, the cryptographic primitive can be a keyshare.

First computing system 202 can receive second message 216 and process the associated cryptographic primitive using PQC operation(s) 218 to generate, derive, recover, etc. PQC-based shared secret 214.

PQC operation(s) 218 can include one or more processing sequences configured to use operations that are challenging for quantum computers to perform. Example PQC operation(s) 218 cannot be resolved in polynomial time by a quantum computer using one or more quantum processors having one or more qubits (e.g., using Shor's algorithm). An example PQC operation 218 can exhibit less than exponential speed-up when processing moves from classical to quantum processors. An example PQC operation 218 can exhibit quadratic or linear speed-up when processing moves from classical to quantum processors (e.g., using Grover's algorithm).

Example PQC operation(s) 218 can include lattice-based cryptography. Example PQC operation(s) 218 can include code-based cryptography. Example PQC operation(s) 218 can include multivariate polynomial cryptography. Example PQC operation(s) 218 can include hash-based signatures.

PQC-based session key 220 can be a symmetric encryption key. PQC-based session key 220 can be used to encrypt and decrypt messages to be shared between first computing system 202 and second computing system 204.

PQC-based session key 220 can flow from or otherwise be a derivative of PQC-based shared secret 214. For instance, PQC-based session key 220 can be generated from PQC-based shared secret 214. PQC-based session key 220 can be generated by processing PQC-based shared secret 214 with a key generation component.

A system (e.g., first computing system 202 or second computing system 204) can generate PQC-based session key 220 using PQC-based shared secret 214. A system (e.g., first computing system 202 or second computing system 204) can generate PQC-based session key 220 using PQC-based shared secret 214 in conjunction with other primitives, such as a second secret value (e.g., a non-PQC-based secret, such as a secret obtained via traditional encryption protocols, such as RSA or AES). For example, a second secret value can be a Diffie-Hellman parameter. PQC-based shared secret 214 can be independent of the second secret value. PQC-based shared secret 214 can be dependent on the second secret value.

For example, a combined secret can include PQC-based shared secret 214 and a second secret value. A combined secret can include PQC-based shared secret 214 concatenated with a second secret value. PQC-based shared secret 214 and a second secret value can be combined in other ways, such as interleaving, splicing, etc.

A system (e.g., first computing system 202 or second computing system 204) can hash a combined secret containing PQC-based shared secret 214 and a second secret to obtain a hashed combined secret. The hashed combined secret can be subdivided into portions that each encode some of the entropy of the PQC operations performed in generating PQC-based shared secret 214. The portions can be sequentially arranged or contiguous portions (e.g., the portions concatenated together). The portions can be overlapping or disjoint portions.

For example, a hashed combined secret can be subdivided into at least two portions. A first portion can be a primary secret. The primary secret can be used to obtain PQC-based session key 220. A system (e.g., first computing system 202 or second computing system 204) can process the primary secret using a key generator component to obtain PQC-based session key 220. A second portion can be a resumption secret (e.g., PQC-based resumption secret 234). The resumption secret can facilitate resumption of an encrypted session. A third portion can be an authentication secret. An authentication secret can be used, for example, to authenticate or verify one or more values or messages during or after the handshake.

The portions can all be the same length (e.g., 64 bytes). At least one of the portions can be a different length than at least one other portion.

Encrypted session 222 can include an exchange of message(s) between first computing system 202 and second computing system 204 that have been encrypted using PQC-based session key 220.

Resumption handshake 230 can resume an encrypted session (e.g., session 238) after termination of encrypted session 222. In lieu of performing a new full handshake, resumption handshake 230 can re-establish secured communications with the same security as the initial encrypted session 222. Resumption handshake 230 can provide such security using fewer computing resources, less processing time, etc.

First computing system 202 can initiate resumption handshake 230 using resumption message 232. While resumption message 232 is illustrated as being sent from first computing system 202 to second computing system 204, it is to be understood that second computing system 204 could send resumption message 232 to first computing system 202.

Resumption message 232 can include data describing attributes of full handshake 206 or encrypted session 222. Resumption message 232 can include a resumption ticket that presents to second computing system 204 that enables second computing system 204 to retrieve, derive, or regenerate an encryption key that enables the receiving system to resume encrypted communications with the sending system. Resumption message 232 can include, for example, a session identifier or other artifact associated with encrypted session 222. In this manner, for instance, second computing system 204 can use resumption message 232 to obtain PQC-based resumption secret 234.

A system (e.g., first computing system 202 or second computing system 204) can generate data for resumption message 232. A system (e.g., first computing system 202 or second computing system 204) can generate a session ticket (e.g., a resumption ticket) that the system can present to another system for initiating an encrypted session with the other system. The generated ticket can be encrypted using a private key so that the system can decrypt the ticket when received. The key used to encrypt the ticket can be stored in association with the resumption task. For instance, the key used to encrypt the ticket can be a resumption key stored for later decrypting the ticket if received during a resumption handshake. Successful decryption of a resumption ticket can indicate that the ticket is valid and the corresponding resumption secret obtained therefrom (or obtained using the ticket) can be used to obtain a session key for resuming an encrypted communication session.

A system (e.g., first computing system 202 or second computing system 204) can obtain PQC-based resumption secret 234 from storage. A system (e.g., first computing system 202 or second computing system 204) can obtain PQC-based resumption secret 234 from a cache or a database by identifying a record based on resumption message 232.

A system (e.g., first computing system 202 or second computing system 204) can obtain PQC-based resumption secret 234 from resumption message 232 directly. For instance, a system (e.g., first computing system 202 or second computing system 204) can obtain PQC-based resumption secret 234 by decrypting resumption message 232.

A system (e.g., first computing system 202 or second computing system 204) can obtain PQC-based resumption secret 234 from PQC-based shared secret 214. For instance, a portion of PQC-based shared secret 214 can be PQC-based resumption secret 234.

PQC-based session key 236 can be a symmetric encryption key. PQC-based session key 236 can be used to encrypt and decrypt messages to be shared between first computing system 202 and second computing system 204.

PQC-based session key 236 can flow from or otherwise be a derivative of PQC-based resumption secret 234. For instance, PQC-based session key 236 can be generated from PQC-based shared secret 234. A system (e.g., first computing system 202 or second computing system 204) can obtain PQC-based session key 236 from PQC-based resumption secret 234. For instance, a system (e.g., first computing system 202 or second computing system 204) can process PQC-based resumption secret 234 using a key generator to generate or derive PQC-based session key 236.

Encrypted session 238 can include one or more messages sent between first computing system 202 and second computing system 204 that are encrypted using PQC-based session key 236.

Resumption handshake 230 can be implemented one or more times to initiate or re-initiate encrypted sessions between first computing system 202 and second computing system 204. Resumption handshake 230 can be implemented between first computing system 202 and another computing system other than second computing system 204 to initiate a secured session without engaging in full handshake 206. Resumption handshake 230 can be implemented between second computing system 204 and another computing system other than first computing system 202 to initiate a secured session without engaging in full handshake 206.

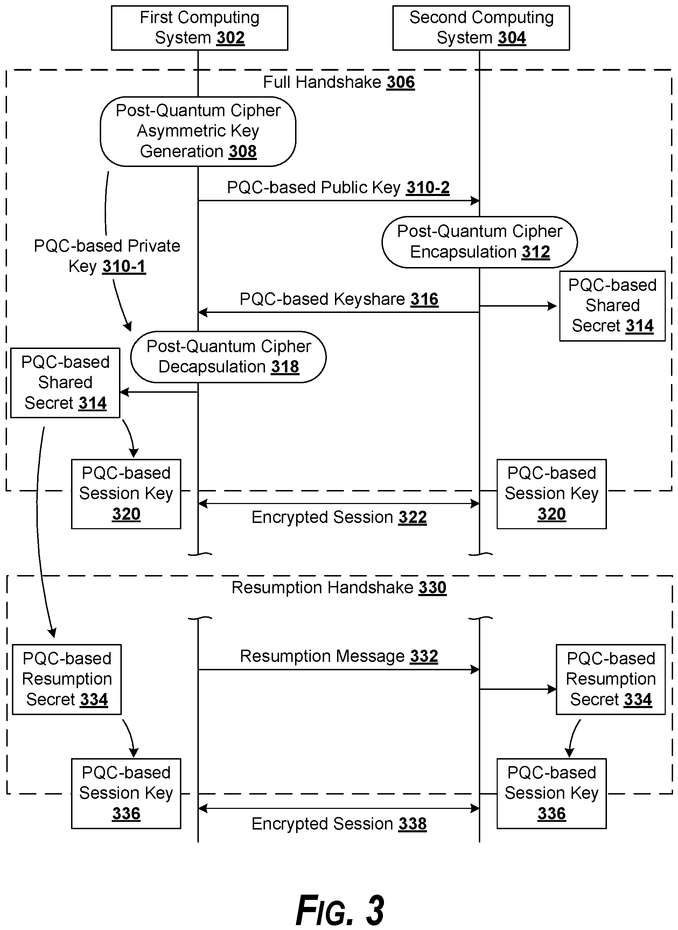

Figure 3 describes example implementations in further detail. First computing system 302 can communicate with second computing system 304 to engage in a full handshake 306. In full handshake 306, first computing system 302 can perform PQC Asymmetric Key Generation 308. PQC Asymmetric Key Generation 308 can generate a pair of keys: a PQC-based private key 310-1 and a PQC-based public key 310-2. First computing system 302 can send PQC-based public key 310-2 to second computing system 304 in a first message. Second computing system 304 can perform PQC encapsulation 312 on PQC-based public key 310-2 to generate PQC-based shared secret 314 and PQC-based keyshare 316. Second computing system 304 can return a second message to first computing system 302 that contains PQC-based keyshare 316. First computing system 302 can perform PQC decapsulation 318 using PQC-based keyshare 316 to obtain PQC-based shared secret 314. Both first computing system 302 and second computing system 304 can obtain the same PQC-based shared secret 314 and thus derive the same PQC-based session key 320 for establishing and maintaining an encrypted session 322 for encoded and decoding encrypted messages sent between first computing system 302 and second computing system 304.

After some period of time, encrypted session 322 may pause, terminate, expire, etc. To resume the encrypted session after a period of time, first computing system 302 and second computing system 304 can engage in a resumption handshake 330. Resumption handshake 330 can be performed without repeating one or more (or all) of PQC operation(s) 308, 312, 318, etc. Resumption handshake 330 can facilitate re-using previously derived credentials for encrypting the session. For instance, first computing system 302 can send resumption message 332 to second computing system 304. Resumption message 332 can contain data that allows second computing system 304 to obtain a resumption secret 334 that is derived from the original PQC-based shared secret 314. Once first computing system 302 and second computing system 304 both possess PQC-based session key 336 derived from resumption secret 334, the systems can establish and maintain a resumed encrypted session 338. In this manner, for instance, resumed session 338 can be encrypted based on PQC operation(s) 308, 312, 318, etc. without repeating one or more (or all) of PQC operation(s) 308, 312, 318, etc.

First computing system 302 can be the same as or different from first computing system 102 or 202. First computing system 302 can include one or more computing devices or components. First computing system 302 can include one or more co-located devices or multiple distributed computing devices. Example computing systems are described herein with respect to Figure 8. First computing system 302 can be a virtual machine, a containerized instance of a computing process, a bare metal computing system, etc. Actions ascribed to first computing system 302 can be performed by the same device within first computing system 302 or by different devices within, controlled by, or otherwise associated with first computing system 302.

Second computing system 304 can be the same as or different from second computing system 104 or 204. Second computing system 304 can include one or more computing devices or components. Second computing system 304 can include one or more co-located devices or multiple distributed computing devices. Example computing systems are described herein with respect to Figure 8. Second computing system 304 can be a virtual machine, a containerized instance of a computing process, a bare metal computing system, etc. Actions ascribed to second computing system 304 can be performed by the same device within second computing system 304 or by different devices within, controlled by, or otherwise associated with second computing system 304.

Example actions described herein as being performed by first computing system 302 can be instead performed by second computing system 304, and actions described herein as being performed by second computing system 304 can instead be performed by first computing system 302.

Full handshake 306 can be the same as or different from full handshake 106 or full handshake 306. Full handshake 306 can include a sequence of communications between first computing system 302 and second computing system 304 that establish a shared encryption protocol for encrypting and decrypting messages passed between first computing system 302 and second computing system 304. For instance, full handshake 306 can include an exchange of information that allows each of first computing system 302 and second computing system 304 to generate a shared secret used to initiate and maintain encrypted communications.

To establish a secure communication channel robust to attack using quantum computers, full handshake 306 can include performance of one or more post quantum operation(s) 308, 312, 318, etc. First computing system 302 can perform one or more PQC operation(s) 308, 312, 318, etc. Second computing system 304 can perform one or more PQC operation(s) 308, 312, 318, etc. One or more PQC operation(s) 308, 312, 318, etc. performed by first computing system 302 can be the same as or different from one or more PQC operation(s) 308, 312, 318, etc. performed by second computing system 304.

For example, first computing system 302 can perform PQC operation(s) to implement PQC asymmetric key generation 308 to generate a first cryptographic output (e.g., a cryptographic primitive) to send in a first message to second computing system 304. PQC asymmetric key generation 308 can include, for instance, generating, using one or more post-quantum cryptography operation, a public key value and a private key value.

PQC asymmetric key generation 308 can include one or more processing sequences configured to use operations that are challenging for quantum computers to perform. Example PQC asymmetric key generation 308 operations cannot be resolved in polynomial time by a quantum computer using one or more quantum processors having one or more qubits (e.g., using Shor's algorithm). An example PQC asymmetric key generation 308 operation can exhibit less than exponential speed-up when processing moves from classical to quantum processors. An example PQC asymmetric key generation 308 operation can exhibit quadratic or linear speed-up when processing moves from classical to quantum processors (e.g., using Grover's algorithm).

Example PQC asymmetric key generation 308 operations can include lattice-based cryptography. Example PQC asymmetric key generation 308 operations can include code-based cryptography. Example PQC asymmetric key generation 308 operations can include multivariate polynomial cryptography. Example PQC asymmetric key generation 308 operations can include hash-based signatures.

PQC asymmetric key generation 308 can generate PQC-based private key 310-1 and PQC-based public key 310-2. First computing system 302 can securely persist PQC-based private key 310-1 on device to maintain secrecy of PQC-based private key 310-1. First computing system 302 can transmit PQC-based public key 310-2 to second computing system 304 as part of an asymmetric key exchange protocol.

PQC-based private key 310-1 and PQC-based public key 310-2 can be or include any cryptographic primitive that enables post-quantum robustness against attack. PQC-based private key 310-1 and PQC-based public key 310-2 can encode sufficient entropy from PQC asymmetric key generation 308 operations to cause an estimated time to breach the code to exceed a threshold.

A first message from first computing system 302 to second computing system 304 can include or otherwise communicate PQC-based public key 310-2. PQC-based public key 310-2 can be configured to allow second computing system 304 to obtain PQC-based shared secret 314 using one or more PQC operations.

Second computing system 304 can derive PQC-based shared secret 314 using PQC-based public key 310 by processing PQC-based public key 310 using PQC encapsulation 312 operations. PQC encapsulation 312 can include one or more PQC operations configured to generate PQC-based keyshare 316 and PQC-based shared secret 314, where PQC keyshare 316 is configured to allow first computing system 302 to also generate, derive, or otherwise obtain PQC-based shared secret 314.

PQC encapsulation 312 can include one or more processing sequences configured to use operations that are challenging for quantum computers to perform. Example PQC encapsulation 312 operation(s) cannot be resolved in polynomial time by a quantum computer using one or more quantum processors having one or more qubits (e.g., using Shor's algorithm). An example PQC encapsulation 312 operation can exhibit less than exponential speed-up when processing moves from classical to quantum processors. An example PQC encapsulation 312 operation can exhibit quadratic or linear speed-up when processing moves from classical to quantum processors (e.g., using Grover's algorithm).

Example PQC encapsulation 312 operation(s) can include lattice-based cryptography. Example PQC encapsulation 312 operation(s) can include code-based cryptography. Example PQC encapsulation 312 operation(s) can include multivariate polynomial cryptography. Example PQC encapsulation 312 operation(s) can include hash-based signatures.

PQC encapsulation 312 operation(s) can generate, from a cryptographic output received from first computing system 302 (e.g., a PQC-based public key 310), one or more cryptographic outputs. The cryptographic outputs can include a cryptographic primitive from which second computing system 304 can derive a symmetric encryption key. For instance, the cryptographic outputs can include a PQC-based shared secret 314. The cryptographic outputs can also include a second cryptographic primitive from which first computing system 302 can also derive PQC-based shared secret 314.

PQC-based shared secret 314 can be or include any value that encodes at least a portion of the entropy of the cryptographic operations performed in PQC operation(s) 308, 312, 318, etc. A PQC-based shared secret 314 can be or be based on an output of one or more of the PQC operation(s) 308, 312, 318, etc. performed during full handshake 306. PQC-based shared secret 314 can be a value generated based on an output of one or more of the PQC operation(s) 308, 312, 318, etc. performed during full handshake 306. PQC-based shared secret 314 can provide a mutual primitive from which first computing system 302 and second computing system 304 can generate cryptographic keys for encrypting and decrypting messages.

First computing system 302 can receive PQC-based keyshare 316 and process the associated cryptographic primitive using PQC decapsulation 318 operations to generate, derive, recover, etc. PQC-based shared secret 314.

PQC decapsulation 318 operations can include one or more processing sequences configured to use operations that are challenging for quantum computers to perform. Example PQC decapsulation 318 operations cannot be resolved in polynomial time by a quantum computer using one or more quantum processors having one or more qubits (e.g., using Shor's algorithm). An example PQC decapsulation 318 operation can exhibit less than exponential speed-up when processing moves from classical to quantum processors. An example PQC decapsulation 318 operation can exhibit quadratic or linear speed-up when processing moves from classical to quantum processors (e.g., using Grover's algorithm).

Example PQC decapsulation 318 operations can include lattice-based cryptography. Example PQC decapsulation 318 operations can include code-based cryptography. Example PQC decapsulation 318 operations can include multivariate polynomial cryptography. Example PQC decapsulation 318 operations can include hash-based signatures.

PQC-based session key 320 can be a symmetric encryption key. PQC-based session key 320 can be used to encrypt and decrypt messages to be shared between first computing system 302 and second computing system 304.

PQC-based session key 320 can flow from or otherwise be a derivative of PQC-based shared secret 314. For instance, PQC-based session key 320 can be generated from PQC-based shared secret 314. PQC-based session key 320 can be generated by processing PQC-based shared secret 314 with a key generation component.

A system (e.g., first computing system 302 or second computing system 304) can generate PQC-based session key 320 using PQC-based shared secret 314. A system (e.g., first computing system 302 or second computing system 304) can generate PQC-based session key 320 using PQC-based shared secret 314 in conjunction with other primitives, such as a second secret value (e.g., a non-PQC-based secret, such as a secret obtained via traditional encryption protocols, such as RSA or AES). For example, a second secret value can be a Diffie-Hellman parameter. PQC-based shared secret 314 can be independent of the second secret value. PQC-based shared secret 314 can be dependent on the second secret value.

For example, a combined secret can include PQC-based shared secret 314 and a second secret value. A combined secret can include PQC-based shared secret 314 concatenated with a second secret value. PQC-based shared secret 314 and a second secret value can be combined in other ways, such as interleaving, splicing, etc.

A system (e.g., first computing system 302 or second computing system 304) can hash a combined secret containing PQC-based shared secret 314 and a second secret to obtain a hashed combined secret. The hashed combined secret can be subdivided into portions that each encode some of the entropy of the PQC operations performed in generating PQC-based shared secret 314. The portions can be sequentially arranged or contiguous portions (e.g., the portions concatenated together). The portions can be overlapping or disjoint portions.

For example, a hashed combined secret can be subdivided into at least two portions. A first portion can be a primary secret. The primary secret can be used to obtain PQC-based session key 320. A system (e.g., first computing system 302 or second computing system 304) can process the primary secret using a key generator component to obtain PQC-based session key 320. A second portion can be a resumption secret (e.g., PQC-based resumption secret 334). The resumption secret can facilitate resumption of an encrypted session. A third portion can be an authentication secret. An authentication secret can be used, for example, to authenticate or verify one or more values or messages during or after the handshake.

The portions can all be the same length (e.g., 64 bytes). At least one of the portions can be a different length than at least one other portion.

Encrypted session 322 can include an exchange of message(s) between first computing system 302 and second computing system 304 that have been encrypted using PQC-based session key 320.

Resumption handshake 330 can resume an encrypted session (e.g., session 338) after termination of encrypted session 322. In lieu of performing a new full handshake, resumption handshake 330 can re-establish secured communications with the same security as the initial encrypted session 322. Resumption handshake 330 can provide such security using fewer computing resources, less processing time, etc.

First computing system 302 can initiate resumption handshake 330 using resumption message 332. While resumption message 332 is illustrated as being sent from first computing system 302 to second computing system 304, it is to be understood that second computing system 304 could send resumption message 332 to first computing system 302.

Resumption message 332 can include data describing attributes of full handshake 306 or encrypted session 322. Resumption message 332 can include a resumption ticket that presents to second computing system 304 that enables second computing system 304 to retrieve, derive, or regenerate an encryption key that enables the receiving system to resume encrypted communications with the sending system. Resumption message 332 can include, for example, a session identifier or other artifact associated with encrypted session 322. In this manner, for instance, second computing system 304 can use resumption message 332 to obtain PQC-based resumption secret 334.

A system (e.g., first computing system 302 or second computing system 304) can generate data for resumption message 332. A system (e.g., first computing system 302 or second computing system 304) can generate a session ticket (e.g., a resumption ticket) that the system can present to another system for initiating an encrypted session with the other system. The generated ticket can be encrypted using a private key so that the system can decrypt the ticket when received. The key used to encrypt the ticket can be stored in association with the resumption task. For instance, the key used to encrypt the ticket can be a resumption key stored for later decrypting the ticket if received during a resumption handshake. Successful decryption of a resumption ticket can indicate that the ticket is valid and the corresponding resumption secret obtained therefrom (or obtained using the ticket) can be used to obtain a session key for resuming an encrypted communication session.

A system (e.g., first computing system 302 or second computing system 304) can obtain PQC-based resumption secret 334 from storage. A system (e.g., first computing system 302 or second computing system 304) can obtain PQC-based resumption secret 334 from a cache or a database by identifying a record based on resumption message 332.

A system (e.g., first computing system 302 or second computing system 304) can obtain PQC-based resumption secret 334 from resumption message 332 directly. For instance, a system (e.g., first computing system 302 or second computing system 304) can obtain PQC-based resumption secret 334 by decrypting resumption message 332.

A system (e.g., first computing system 302 or second computing system 304) can obtain PQC-based resumption secret 334 from PQC-based shared secret 314. For instance, a portion of PQC-based shared secret 314 can be PQC-based resumption secret 334.

PQC-based session key 336 can be a symmetric encryption key. PQC-based session key 336 can be used to encrypt and decrypt messages to be shared between first computing system 302 and second computing system 304.

PQC-based session key 336 can flow from or otherwise be a derivative of PQC-based resumption secret 334. For instance, PQC-based session key 336 can be generated from PQC-based shared secret 334. A system (e.g., first computing system 302 or second computing system 304) can obtain PQC-based session key 336 from PQC-based resumption secret 334. For instance, a system (e.g., first computing system 302 or second computing system 304) can process PQC-based resumption secret 334 using a key generator to generate or derive PQC-based session key 336.

Encrypted session 338 can include one or more messages sent between first computing system 302 and second computing system 304 that are encrypted using PQC-based session key 336.

Resumption handshake 330 can be implemented one or more times to initiate or re-initiate encrypted sessions between first computing system 302 and second computing system 304. Resumption handshake 330 can be implemented between first computing system 302 and another computing system other than second computing system 304 to initiate a secured session without engaging in full handshake 306. Resumption handshake 330 can be implemented between second computing system 304 and another computing system other than first computing system 302 to initiate a secured session without engaging in full handshake 306.

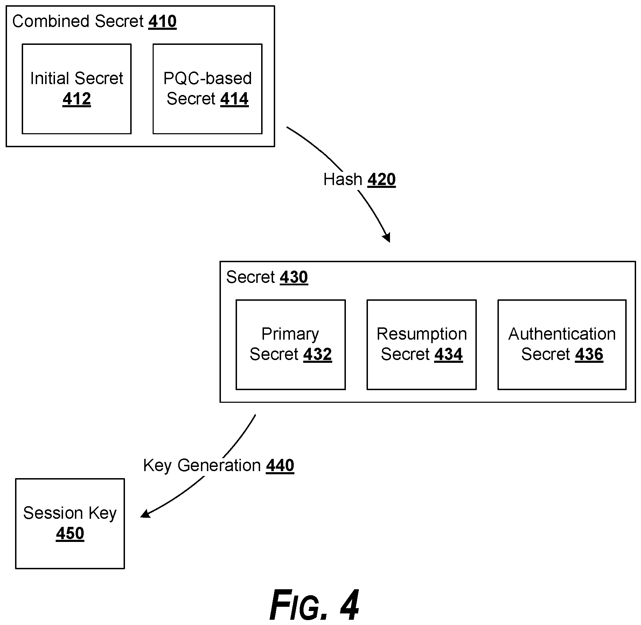

Figure 4 illustrates generation of a shared secret from a subdivided cryptological primitive. For example, a combined secret 410 can include an initial secret 412 and a PQC-based secret 414. Combined secret 410 can be passed through hash 420 operations to generate a secret 430. Secret 430 can include multiple parts. In an example, three portions are respectively designated as primary secret 432, resumption secret 434, and authentication secret 436. At least a portion of secret 430 can undergo key generation 440 to obtain a session key 450.

Combined secret 410 can be an example of a combined secret that contains PQC-based secret 414, which can be the same as or different from PQC-based shared secret 110, PQC-based shared secret 214, or PQC-based shared secret 314. Combined secret 410 can be generated by concatenating or otherwise combining initial secret 412 and PQC-based secrete 414. Combined secret 410 can be generated first and then initial secret 412 and PQC-based secret 414 can be designated from subdivisions within combined secret 410.

Initial secret 412 can be or include a cryptographic primitive that is obtained separately from PQC-based secret 414. Initial secret 412 can be or include a cryptographic primitive that is obtained independently of PQC-based secret 414. Initial secret 412 can be or include a cryptographic primitive that is obtained using techniques that are not post-quantum secure. Initial secret 412 can be or include a cryptographic primitive obtained using, for instance, a Diffie-Hellman key exchange protocol, elliptic curve cryptography, etc.

Initial secret 412 can be or include a shared secret that is shared between a sender and a receiver (e.g., first computing system 102 and second computing system 104, first computing system 202 and second computing system 204, first computing system 302 and second computing system 304, etc.).

PQC-based secret 414 can be or include PQC-based shared secret 110, PQC-based shared secret 214, or PQC-based shared secret 314. For example, initial secret 412 and PQC-based secret 414 can be shared between a sender and a receiver (e.g., first computing system 102 and second computing system 104, first computing system 202 and second computing system 204, first computing system 302 and second computing system 304, etc.). In this manner, for instance, combined secret 410 can be a shared secret.

Hash 420 operations can generate secret 430 by hashing combined secret 410. Hash 420 can include a variety of hash functions. Example hash functions include Message Digest Algorithm 5 (MD5), Secure Hash Algorithm (SHA) family functions, including SHA-1, SHA-256, or SHA-3, Whirlpool hash functions, RIPEMD (RACE Integrity Primitives Evaluation Message Digest) family, etc. In general, any cryptographic hash function can be used. A hash function can process an input and produce an output (e.g., a fixed-size string of bytes) that can operate as a digital signature. The output can be referred to as a hash and can be unique to every unique input. Modifications to the input can result in a different hash output.

Secret 430 can be or include a shared secret shared between a sender and a receiver (e.g., first computing system 102 and second computing system 104, first computing system 202 and second computing system 204, first computing system 302 and second computing system 304, etc.). For example, if combined secret 410 is a shared secret, and a shared hash function 420 is used to hash combined secret 410, then secret 430 can be a shared secret as well. In this manner, for instance, secret 430 can be used by a sender and a receiver (e.g., first computing system 102 and second computing system 104, first computing system 202 and second computing system 204, first computing system 302 and second computing system 304, etc.) to obtain a common set of encryption keys to encrypt/decrypt messages between the sender and the receiver.

Primary secret 432 can be a portion of secret 430 designated for input to a key generator during key generation 440 to generate session key 450. Primary secret 432 can be used as the session key directly. The session key can be a hash of primary secret 432 and another value (e.g., a cryptographic nonce) to provide for uniqueness of the session key for a particular session (e.g., as distinct from prior or future session(s) based on the same cryptographic primitives). The processing of the secret can involve cryptographic operations such as encryption, hashing, or other transformations. The session key output by the key generator can have different lengths or strengths. For instance, a key generator can produce a 128-bit, 256-bit, or other lengths of session keys. The secret and the key generation algorithm can both be adapted as desired to generate different types of session keys. Furthermore, the session key can be a symmetric key, used for symmetric encryption, or it can be an asymmetric key pair, used for asymmetric encryption. The key generator can also be designed to refresh or rotate the session key periodically or in response to certain triggers, enhancing the security of the system.

For instance, example implementations can use the Hash-based Message Authentication Code (HMAC) as a key derivation function (KDF). For instance, the shared secret can be combined with a unique, non-secret value (which can be referred to as a salt) and then hashed using a secure hash algorithm (e.g., SHA-256). The resulting hash can be truncated to the desired session key length.

Example implementations can use a pseudorandom function (PRF) as a KDF. The shared secret can be used as a seed to the PRF, which can then generate a pseudorandom bit string of the desired length. This bit string can serve as the session key.

Example implementations can use a password-based key derivation function (PBKDF), such as PBKDF2 or bcrypt. For instance, primary secret 432 can be treated as a password. The PBKDF can then apply a secure hash function multiple times to the shared secret and a salt to obtain the session key.

Resumption secret 434 can be a portion of secret 430 designated to be stored or cached for later use to resume a session between a sender and a receiver (e.g., first computing system 102 and second computing system 104, first computing system 202 and second computing system 204, first computing system 302 and second computing system 304, etc.). Resumption secret 434 can be or include PQC-based resumption secret 120, PQC-based resumption secret 234, or PQC-based resumption secret 334.

Authentication secret 436 can be used to verify messages transmitted during the handshake between the sender and the receiver. For instance, example implementations of the present disclosure can incorporate an authentication secret to validate messages transmitted during a handshake between a sender and a receiver (e.g., first computing system 102 and second computing system 104, first computing system 202 and second computing system 204, first computing system 302 and second computing system 304, etc.). Authentication secret 436 can be known to both the sender and the receiver. For example, authentication secret 436 can be used to generate a message authentication code (MAC) for one or more messages transmitted during the handshake. A system receiving the code (e.g., first computing system 102 and second computing system 104, first computing system 202 and second computing system 204, first computing system 302 and second computing system 304, etc.) can verify the MAC and thus authenticate the message.

Although it is described herein that primary secret 432 can be a portion of secret 430 designated for input to a key generator during key generation 440 to generate session key 450, it is to be understood that any portion or all of secret 430 can be processed during key generation 440 to obtain session key 450.

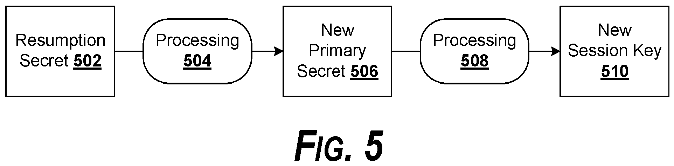

Figure 5 depicts a processing flow diagram for obtaining a session key for a resumed session from a resumption secret. A resumption secret 502 can undergo processing 504 to obtain a new primary secret 506. New primary secret 506 can undergo processing 508 to obtain new session key 510.

Resumption secret 502 can be or include PQC-based resumption secret 120, PQC-based resumption secret 234, PQC-based resumption secret 334, or resumption secret 434.

Processing 504 operations can include the same or different operations as used to generate primary secret 432 from combined secret 410. For example, in a resumption handshake, the cached resumption secret 502 can be used as the shared secret, which can be used to derive a new primary secret (e.g., primary secret 506) from which a symmetric session key may be obtained via processing 508. In some cases, in addition to primary secret 506, processing 504 can generate a new resumption secret and a new authentication secret, which can or might not be used for later encryption computations, as desired.

Processing 508 operations can include the same or different operations as used to generate a session key from primary secret 432.

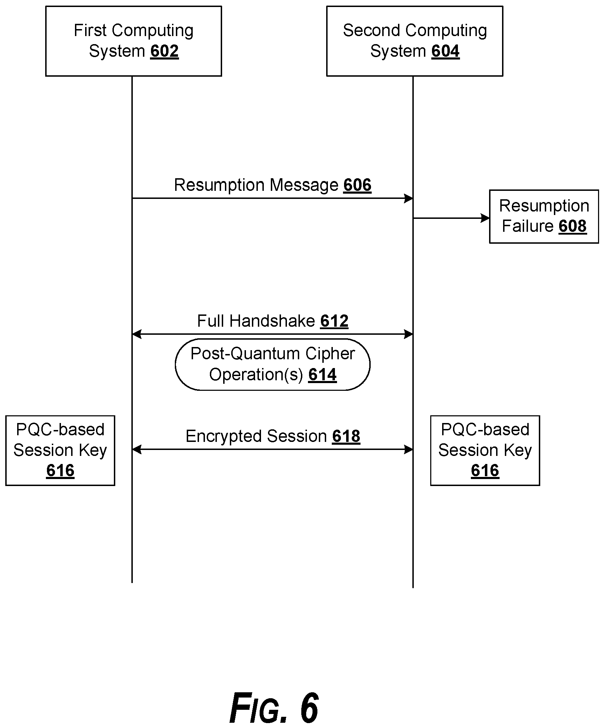

Figure 6 is a block diagram of an example implementation in which a resumption handshake fails and a full handshake is initiated. First computing system 602 can attempt a resumption handshake with second computing system 604 by sending a resumption message 606. Second computing system 604 can determine a resumption failure 608. For instance, if a resumption ticket is indecipherable or not found in a data store, it may be determined that resumption is unavailable (e.g., the resumption ticket has expired). The systems can then engage in a full handshake 612 using PQC operation(s) 614 to obtain a PQC-based session key 616 for conducting an encrypted session 618 (e.g., according to example implementations as described herein with respect to Figures 1 to 5).

Resumption failure 608 can occur for various reasons. Resumption can be subject to a time limit. The time limit can include a threshold number of seconds, minutes, hours, days, etc. within which resumption is permitted and outside of which resumption is not available. For example, upon a resumption key rotation, a resumption ticket encrypted with an old resumption key cannot be successfully decrypted with the rotated resumption key. If such an event happens, the current resumption handshake can end and trigger a new (potentially full) handshake. Additionally, or alternatively, the system can provide an opportunity for resumption initiated by the recipient of the resumption ticket before proceeding to renew with the full handshake. For instance, second computing system 604 can attempt to resolve resumption failure 608 before initiation of full handshake 612.

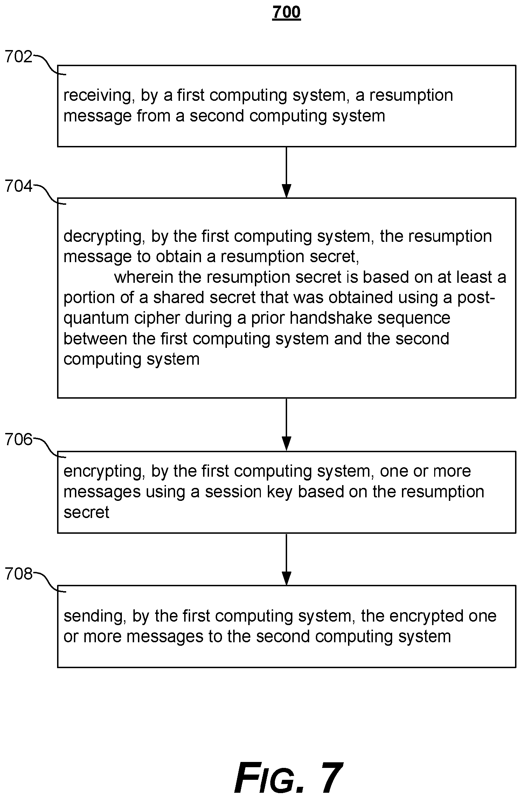

Figure 7 depicts a flow chart diagram of an example method 700 for generating feedback signals for training a machine-learned agent model according to example embodiments of the present disclosure. Example method 700 can be implemented by one or more computing systems (e.g., one or more computing systems as discussed with respect to Figures 1 to 8). Although Figure 7 depicts steps performed in a particular order for purposes of illustration and discussion, the methods of the present disclosure are not limited to the particularly illustrated order or arrangement. The various steps of example method 700 can be omitted, rearranged, combined, and/or adapted in various ways without deviating from the scope of the present disclosure.

At 702, example method 700 can include receiving, by a first computing system, a resumption message from a second computing system. For instance, the first computing system can be first computing system 102, 202, 302, 602. The first computing system can be second computing system 104, 204, 304, 604. The second computing system can be first computing system 102, 202, 302, 602. The second computing system can be second computing system 104, 204, 304, 604. A resumption message can be part of resumption handshake 116 or be resumption message 232, 332.

At 702, example method 700 can include decrypting, by the first computing system, the resumption message to obtain a resumption secret. In some implementations of example method 700, the resumption secret is based on at least a portion of a shared secret that was obtained using a post-quantum cipher during a prior handshake sequence between the first computing system and the second computing system. For example, the resumption secret can be resumption secret 120, 234, 334, 434, 502.

At 704, example method 700 can include encrypting, by the first computing system, one or more messages using a session key based on the resumption secret. For example, a session key can be a session key 122, 236, 336, 450, 510, 616.

At 706, example method 700 can include sending, by the first computing system, the encrypted one or more messages to the second computing system.

In some implementations of example method 700, encrypting, by the first computing system, the one or more messages based on the resumption secret includes obtaining, by the first computing system, a primary secret (e.g., primary secret 432, 506) from the resumption secret. In some implementations of example method 700, encrypting, by the first computing system, the one or more messages based on the resumption secret includes encrypting, by the first computing system, the one or more messages using a session key obtained using the primary secret. For example, the session key can be a session key 122, 236, 336, 450, 510, 616.

In some implementations of example method 700, obtaining, by the first computing system, the primary secret includes hashing, by the first computing system, the resumption secret. In some implementations of example method 700, obtaining, by the first computing system, the primary secret includes extracting, by the first computing system, a portion of the hashed output as the primary secret.

In some implementations of example method 700, the shared secret was obtained by hashing a first value together with a second value, wherein the first value was obtained using the post-quantum cipher. For example, the first value can be PQC-based shared secret 110, 214, 314, PQC-based secret 414. In some implementations of example method 700, the second value was not obtained using the post-quantum cipher. For example, the second value can be initial secret 412. In some implementations of example method 700, the second value comprises a Diffie-Hellman parameter.

In some implementations of example method 700, the prior handshake sequence includes hashing the first value together with the second value to obtain the shared secret. In some implementations of example method 700, the prior handshake sequence includes designating a first portion of the shared secret as an initial primary secret (e.g., primary secret 432, 506). In some implementations of example method 700, the prior handshake sequence includes designating a second portion of the shared secret as the resumption secret. In some implementations of example method 700, the prior handshake sequence includes obtaining a session key for encrypting one or more messages using the initial primary secret.

In some implementations of example method 700, the shared secret includes the primary secret concatenated with the resumption secret and an authentication secret. In some implementations of example method 700, the authentication secret is used at the end of a handshake to verify one or more messages sent between the first computing system and the second computing system.

In some implementations of example method 700, the prior handshake sequence includes receiving, by the first computing system and from the second computing system, a public key obtained using a post-quantum cipher. In some implementations of example method 700, the prior handshake sequence includes generating, by the first computing system and based on the public key, the shared secret and a keyshare. In some implementations of example method 700, the prior handshake sequence includes sending, by the first computing system, the keyshare to the second computing system. In some implementations of example method 700, the prior handshake sequence includes receiving, by the first computing system and from the second computing system, one or more messages encrypted by the second computing system using the shared secret. In some implementations of example method 700, the second computing system obtained the shared secret using the keyshare and a private key corresponding to the public key.

In some implementations of example method 700, the first computing system does not receive the public key from the second computing system again when resuming the communication session.

Figure 8 depicts a block diagram of an example computing system that can perform according to example embodiments of the present disclosure. The system includes a computing device 2, a server computing system 30, and a training computing system 50 that are communicatively coupled over a network 70.

The computing device 2 can be any type of computing device, such as, for example, a personal computing device (e.g., laptop or desktop), a mobile computing device (e.g., smartphone or tablet), a gaming console or controller, a wearable computing device, an embedded computing device, or any other type of computing device. In some embodiments, the computing device 2 can be a client computing device. The computing device 2 can include one or more processors 12 and a memory 14. The one or more processors 12 can be any suitable processing device (e.g., a processor core, a microprocessor, an ASIC, an FPGA, a controller, a microcontroller, etc.) and can be one processor or a plurality of processors that are operatively connected. The memory 14 can include one or more non-transitory computer-readable storage media, such as RAM, ROM, EEPROM, EPROM, flash memory devices, magnetic disks, etc., and combinations thereof. The memory 14 can store data 16 and instructions 18 which are executed by the processor 12 to cause the user computing device 2 to perform operations (e.g., to perform operations implementing input data structures and self-consistency output sampling according to example embodiments of the present disclosure, etc.).

In some implementations, the user computing device 2 can store or include one or more machine-learned models 20. For example, the machine-learned models 20 can be or can otherwise include various machine-learned models such as neural networks (e.g., deep neural networks) or other types of machine-learned models, including non-linear models or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models). Model(s) 20 can include any one or more of agent model 110, reward model 130, supervisor model 330, etc.

In some implementations, one or more machine-learned models 20 can be received from the server computing system 30 over network 70, stored in the computing device memory 14, and used or otherwise implemented by the one or more processors 12. In some implementations, the computing device 2 can implement multiple parallel instances of a machine-learned model 20.

Additionally, or alternatively, one or more machine-learned models 40 can be included in or otherwise stored and implemented by the server computing system 30 that communicates with the computing device 2 according to a client-server relationship. Model(s) 40 can include any one or more of agent model 110, reward model 130, supervisor model 330, etc.

In some embodiments, the machine-learned models 40 can be implemented by the server computing system 30 as a portion of a web service (e.g., remote machine-learned model hosting service, such as an online interface for performing machine-learned model operations over a network on remote servers 30). For instance, the server computing system 30 can communicate with the computing device 2 over a local intranet or internet connection. For instance, the computing device 2 can be a workstation or endpoint in communication with the server computing system 30, with implementation of the model 40 on the server computing system 30 being remotely performed and an output provided (e.g., cast, streamed, etc.) to the computing device 2. Thus, one or more models 20 can be stored and implemented at the user computing device 2 or one or more models 40 can be stored and implemented at the server computing system 30.

The computing device 2 can also include one or more input components that receive user input. For example, a user input component can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

The server computing system 30 can include one or more processors 32 and a memory 34. The one or more processors 32 can be any suitable processing device (e.g., a processor core, a microprocessor, an ASIC, an FPGA, a controller, a microcontroller, etc.) and can be one processor or a plurality of processors that are operatively connected. The memory 34 can include one or more non-transitory computer-readable storage media, such as RAM, ROM, EEPROM, EPROM, flash memory devices, magnetic disks, etc., and combinations thereof. The memory 34 can store data 36 and instructions 38 which are executed by the processor 32 to cause the server computing system 30 to perform operations (e.g., to perform operations implementing input data structures and self-consistency output sampling according to example embodiments of the present disclosure, etc.).

In some implementations, the server computing system 30 includes or is otherwise implemented by one or more server computing devices. In instances in which the server computing system 30 includes plural server computing devices, such server computing devices can operate according to sequential computing architectures, parallel computing architectures, or some combination thereof.

The network 70 can be any type of communications network, such as a local area network (e.g., intranet), wide area network (e.g., Internet), or some combination thereof and can include any number of wired or wireless links. In general, communication over the network 70 can be carried via any type of wired or wireless connection, using a wide variety of communication protocols (e.g., TCP/IP, HTTP, SMTP, FTP), encodings or formats (e.g., HTML, XML), or protection schemes (e.g., VPN, secure HTTP, SSL).

Figure 8 illustrates one example computing system that can be used to implement the present disclosure. Other computing systems can be used as well.

Example computing system(s) can include an example networked computing system. The example networked computing system can include a first computing system. The example networked computing system can include a second computing system. The example networked computing system can include a network connecting the first computing system and the second computing system. At least one of the first computing system or the second computing system can implement any one or more of the techniques described herein (e.g., with respect to Figures 1 to 8).

For instance, in the example networked computing system, the first computing system can be configured to send a resumption message to the second computing system. In the example networked computing system, the first computing system can be configured to obtain a resumption secret that enables generation of a session key for a resumed session. The resumption secret can be based on at least a portion of a shared secret that was obtained using a post-quantum cipher during a prior handshake sequence between the first computing system and the second computing system. In the example networked computing system, the second computing system can be configured to decrypt the resumption message to obtain the resumption secret. In the example networked computing system, the second computing system can be configured to generate the session key based on the resumption secret. In the example networked computing system, the second computing system can be configured to transmit a message encrypted by the session key to the first computing system.

In some implementations of the example networked computing system, the resumption secret encodes entropy of one or more post-quantum cipher operations.

In some implementations of the example networked computing system, the post-quantum cipher cannot be breached in polynomial time by a quantum computer.

In some implementations of the example networked computing system, the shared secret was obtained by hashing a first value together with a second value. In some implementations of the example networked computing system, the first value was obtained using the post-quantum cipher. In some implementations of the example networked computing system, the second value was not obtained using the post-quantum cipher.

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

Aspects of the disclosure have been described in terms of illustrative embodiments thereof. Any and all features in the following claims can be combined or rearranged in any way possible, including combinations of claims not explicitly enumerated in combination together, as the example claim dependencies listed herein should not be read as limiting the scope of possible combinations of features disclosed herein. Accordingly, the scope of the present disclosure is by way of example rather than by way of limitation, and the subject disclosure does not preclude inclusion of such modifications, variations or additions to the present subject matter as would be readily apparent to one of ordinary skill in the art. Moreover, terms are described herein using lists of example elements joined by conjunctions such as "and," "or," "but," etc. It should be understood that such conjunctions are provided for explanatory purposes only. Clauses and other sequences of items joined by a particular conjunction such as "or," for example, can refer to "and/or," "at least one of', "any combination of" example elements listed therein, etc. Also, terms such as "based on" should be understood as "based at least in part on."

The term "can" should be understood as referring to a possibility of a feature in various implementations and not as prescribing an ability that is necessarily present in every implementation. For example, the phrase "X can perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

The term "may" should be understood as referring to a possibility of a feature in various implementations and not as prescribing an ability that is necessarily present in every implementation. For example, the phrase "X may perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

Also disclosed herein are the following numbered clauses:
Clause 1. A computer-implemented method for resuming a communication session encrypted using a post-quantum cipher, the method comprising:
   receiving, by a first computing system, a resumption message from a second computing system;
   decrypting, by the first computing system, the resumption message to obtain a resumption secret, wherein the resumption secret is based on at least a portion of a shared secret that was obtained using a post-quantum cipher during a prior handshake sequence between the first computing system and the second computing system;
   encrypting, by the first computing system, one or more messages using a session key based on the resumption secret; and
   sending, by the first computing system, the encrypted one or more messages to the second computing system.
Clause 2. The computer-implemented method of clause 1, wherein encrypting, by the first computing system, the one or more messages based on the resumption secret comprises:
   obtaining, by the first computing system, a primary secret from the resumption secret; and
   encrypting, by the first computing system, the one or more messages using a session key obtained using the primary secret.
Clause 3. The computer-implemented method of clause 2, wherein obtaining, by the first computing system, the primary secret comprises:
   hashing, by the first computing system, the resumption secret; and
   extracting, by the first computing system, a portion of the hashed output as the primary secret.
Clause 4. The computer-implemented method of clause 1, wherein the shared secret was obtained by hashing a first value together with a second value, wherein the first value was obtained using the post-quantum cipher.
Clause 5. The computer-implemented method of clause 4, wherein the second value was not obtained using the post-quantum cipher.
Clause 6. The computer-implemented method of clause 5, wherein the second value comprises a Diffie-Hellman parameter.
Clause 7. The computer-implemented method of clause 4, wherein the prior handshake sequence comprises:
   hashing the first value together with the second value to obtain the shared secret;
   designating a first portion of the shared secret as an initial primary secret;
   designating a second portion of the shared secret as the resumption secret; and
   obtaining a session key for encrypting one or more messages using the initial primary secret.
Clause 8. The computer-implemented method of clause 7, wherein the shared secret comprises the primary secret concatenated with the resumption secret and an authentication secret, wherein the authentication secret is used at the end of a handshake to verify one or more messages sent between the first computing system and the second computing system.
Clause 9. The computer-implemented method of clause 1, wherein the prior handshake sequence comprises:
   receiving, by the first computing system and from the second computing system, a public key obtained using a post-quantum cipher;
   generating, by the first computing system and based on the public key, the shared secret and a keyshare;
   sending, by the first computing system, the keyshare to the second computing system; and
   receiving, by the first computing system and from the second computing system, one or more messages encrypted by the second computing system using the shared secret,
      wherein the second computing system obtained the shared secret using the keyshare and a private key corresponding to the public key.
Clause 10. The computer-implemented method of clause 9, wherein the first computing system does not receive the public key from the second computing system again when resuming the communication session.
Clause 11. A computing system, comprising:
   one or more processors; and
   one or more non-transitory computer-readable media storing instructions that are executable by the one or more processors to cause the computing system to perform operations for resuming a communication session encrypted using a post-quantum cipher, the operations comprising:
      receiving a resumption message from a second computing system;
      decrypting the resumption message to obtain a resumption secret, wherein the resumption secret is based on at least a portion of a shared secret that was obtained using a post-quantum cipher during a prior handshake sequence between the computing system and the second computing system;
      encrypting one or more messages using a session key based on the resumption secret; and
      sending the encrypted one or more messages to the second computing system.
Clause 12. The computing system of clause 11, wherein the shared secret was obtained by hashing a first value together with a second value, wherein the first value was obtained using the post-quantum cipher.
Clause 13. The computing system of clause 12, wherein the second value was not obtained using the post-quantum cipher.
Clause 14. The computing system of clause 13, wherein the second value comprises a Diffie-Hellman parameter.
Clause 15. The computing system of clause 14, wherein the prior handshake sequence comprises:
   receiving, by the first computing system and from the second computing system, a public key obtained using a post-quantum cipher;
   generating, by the first computing system and based on the public key, the shared secret and a keyshare;
   sending, by the first computing system, the keyshare to the second computing system; and
   receiving, by the first computing system and from the second computing system, one or more messages encrypted by the second computing system using the shared secret,
      wherein the second computing system obtained the shared secret using the keyshare and a private key corresponding to the public key.
Clause 16. The computing system of clause 15, wherein the first computing system does not receive the public key from the second computing system again when resuming the communication session.
Clause 17. One or more non-transitory computer-readable media storing instructions that are executable by one or more processors to cause a first computing system to perform operations for resuming a communication session encrypted using a post-quantum cipher, the operations comprising:
   receiving a resumption message from a second computing system;
   decrypting the resumption message to obtain a resumption secret, wherein the resumption secret is based on at least a portion of a shared secret that was obtained using a post-quantum cipher during a prior handshake sequence between the first computing system and the second computing system;
   encrypting one or more messages using a session key based on the resumption secret; and
   sending the encrypted one or more messages to the second computing system.
Clause 18. The one or more non-transitory computer-readable media of clause 17, wherein encrypting the one or more messages based on the resumption secret comprises:
   obtaining, by the first computing system, a primary secret from the resumption secret; and
   encrypting, by the first computing system, the one or more messages using a session key obtained using the primary secret.
Clause 19. The one or more non-transitory computer-readable media of clause 18, wherein obtaining the primary secret comprises:
   hashing the resumption secret; and
   extracting a portion of the hashed output as the primary secret.
Clause 20. The one or more non-transitory computer-readable media of clause 17, wherein the prior handshake sequence comprises:
   receiving, from the second computing system, a public key obtained using a post-quantum cipher;
   generating, based on the public key, the shared secret and a keyshare;
   sending the keyshare to the second computing system; and
   receiving, from the second computing system, one or more messages encrypted by the second computing system using the shared secret,
      wherein the second computing system obtained the shared secret using the keyshare and a private key corresponding to the public key.

## Claims

1. A computer-implemented method for resuming a communication session encrypted using a post-quantum cipher, the method comprising:
receiving, by a first computing system, a resumption message from a second computing system;
decrypting, by the first computing system, the resumption message to obtain a resumption secret, wherein the resumption secret is based on at least a portion of a shared secret that was obtained using a post-quantum cipher during a prior handshake sequence between the first computing system and the second computing system;
encrypting, by the first computing system, one or more messages using a session key based on the resumption secret; and
sending, by the first computing system, the encrypted one or more messages to the second computing system.

2. The computer-implemented method of claim 1, wherein encrypting, by the first computing system, the one or more messages based on the resumption secret comprises:
obtaining, by the first computing system, a primary secret from the resumption secret; and
encrypting, by the first computing system, the one or more messages using a session key obtained using the primary secret.

3. The computer-implemented method of claim 2, wherein obtaining, by the first computing system, the primary secret comprises:
hashing, by the first computing system, the resumption secret; and
extracting, by the first computing system, a portion of the hashed output as the primary secret.

4. The computer-implemented method of any preceding claim, wherein the shared secret was obtained by hashing a first value together with a second value, wherein the first value was obtained using the post-quantum cipher.

5. The computer-implemented method of claim 4, wherein the second value was not obtained using the post-quantum cipher, and/or wherein the second value comprises a Diffie-Hellman parameter.

6. The computer-implemented method of claim 4 or 5, wherein the prior handshake sequence comprises:
hashing the first value together with the second value to obtain the shared secret;
designating a first portion of the shared secret as an initial primary secret;
designating a second portion of the shared secret as the resumption secret; and
obtaining a session key for encrypting one or more messages using the initial primary secret.

7. The computer-implemented method of claim 6, wherein the shared secret comprises the primary secret concatenated with the resumption secret and an authentication secret, wherein the authentication secret is used at the end of a handshake to verify one or more messages sent between the first computing system and the second computing system.

8. The computer-implemented method of any of claims 1-5, wherein the prior handshake sequence comprises:
receiving, by the first computing system and from the second computing system, a public key obtained using a post-quantum cipher;
generating, by the first computing system and based on the public key, the shared secret and a keyshare;
sending, by the first computing system, the keyshare to the second computing system; and
receiving, by the first computing system and from the second computing system, one or more messages encrypted by the second computing system using the shared secret,
wherein the second computing system obtained the shared secret using the keyshare and a private key corresponding to the public key.

9. The computer-implemented method of claim 8, wherein the first computing system does not receive the public key from the second computing system again when resuming the communication session.

10. A computing system, comprising:
one or more processors; and
one or more non-transitory computer-readable media storing instructions that are executable by the one or more processors to cause the computing system to perform operations for resuming a communication session encrypted using a post-quantum cipher, the operations comprising:
receiving a resumption message from a second computing system;
decrypting the resumption message to obtain a resumption secret, wherein the resumption secret is based on at least a portion of a shared secret that was obtained using a post-quantum cipher during a prior handshake sequence between the computing system and the second computing system;
encrypting one or more messages using a session key based on the resumption secret; and
sending the encrypted one or more messages to the second computing system.

11. The computing system of claim 10, wherein the shared secret was obtained by hashing a first value together with a second value, wherein the first value was obtained using the post-quantum cipher.

12. The computing system of claim 11, wherein the second value was not obtained using the post-quantum cipher, and/or wherein the second value comprises a Diffie-Hellman parameter.

13. The computing system of claim 12, wherein the prior handshake sequence comprises:
receiving, by the first computing system and from the second computing system, a public key obtained using a post-quantum cipher;
generating, by the first computing system and based on the public key, the shared secret and a keyshare;
sending, by the first computing system, the keyshare to the second computing system; and
receiving, by the first computing system and from the second computing system, one or more messages encrypted by the second computing system using the shared secret,
wherein the second computing system obtained the shared secret using the keyshare and a private key corresponding to the public key.

14. The computing system of claim 13, wherein the first computing system does not receive the public key from the second computing system again when resuming the communication session.

15. One or more non-transitory computer-readable media storing instructions that are executable by one or more processors to cause a first computing system to perform a method according to any of claims 1-9.
